# EUROPÄISCHE PATENTSCHRIFT

(11) **EP 2 956 951 B1**
(45) Veröffentlichungstag und Bekanntmachung des Hinweises auf die Patenterteilung: **11.04.2018**
(21) Anmeldenummer: 14706513.0
(22) Anmeldetag: 13.02.2014
(51) Int. Cl.: H01H 23/14, G08C 17/02, H02N 1/04

(54) **SCHALTELEMENT MIT TRIBOELEKTRISCHEM ELEMENT**
SWITCH ELEMENT WITH TRIBIOELECTRIC ELEMENT
ÉLÉMENT DE COMMUTATION MUNI D'UN ÉLÉMENT TRIBOÉLECTRIQUE

(30) Priorität: 14.02.2013 DE 102013202375
(43) Veröffentlichungstag der Anmeldung: 23.12.2015
(73) Patentinhaber: Zumtobel Lighting GmbH, 6850 Dornbirn (AT)
(72) Erfinder: SIEGEL, Martin, 88131 Bodolz (DE)
(74) Vertreter: Thun, Clemens
(86) Internationale Anmeldenummer: PCT/EP2014/052794
(87) Internationale Veröffentlichungsnummer: WO 2014/125009

(56) Entgegenhaltungen:
- WO-A2-2004/034560
- WO-A2-2008/045510
- CN-A- 102 710 166
- DE-A1- 10 112 072
- DE-A1-102010 033 514
- John Toom: "Triboelectric Generator Produces Electricity by Harnessing Friction | Georgia Tech Research News", Georgia Institute of Technology 177 North Avenue Atlanta, Georgia 30332-0181 US A, 7. September 2012 (2012-09-07), XP055116928, Gefunden im Internet: URL:http://www.gtresearchnews.gatech.edu/t riboelectric-generator-produces-electricit y-from-friction/ [gefunden am 2014-05-08]

## Beschreibung

Die Erfindung betrifft ein Schaltelement zum Auslösen eines Schaltvorgangs; weiterhin betrifft die Erfindung ein Bedienpanel mit wenigstens einem derartigen Schaltelement, sowie ein Wandsystem mit einem derartigen Schaltelement oder einem derartigen Bedienpanel.

Aus dem Stand der Technik ist ein Schaltelement in Form eines Funkschalters bekannt, der aus der Betätigung des Funkschalters die Energie für die Funkelektronik bezieht. Der Funkschalter weist hierzu ein piezoelektrisches Wandlerelement auf. Letzteres schränkt die Gestaltungsmöglichkeit des Funkschalters deutlich ein. Neben piezoelektrischen Elementen gibt es auch Elemente, die mittels Induktion den benötigten Strom erzeugen, sowie einige andere Konzepte. Alle haben aber gemein, dass sie inhärent intransparente Materialien benötigen.

Aus der Schrift WO 2004/034560 A2 ist ein energieautarker elektromechanischer Funkschalter bekannt, bei dem über ein piezoelektrisches Wandlerelement mechanische in elektrische Energie umgewandelt wird. Zum Einbringen der mechanischen Energie dient ein Betätigungfeld.

Aus der Schrift "Plastic Power: Triboelectric Generator Produces Electricity by Harnessing Frictional Forces Between Transparent Polymer Surfaces" von John Toom ("Georgia Tech Research News", Georgia Institute of Technology 177 North Avenue Atlanta, Georgia 30332-0181 USA, 07.September 2012) ist ein triboelektrisches Element bekannt. Auch die Schrift CN 102 710 166 A zeigt ein solches Element.

Aus der DE 10 2010 033 514 A1 ist ein Bedienelement mit einem Taster bekannt, der so betätigt werden kann, dass er gegen ein Federelement drückt. Der Taster ist auf einer als Tastschirm ausgebildeten Sensorschicht angeordnet, wobei der Bereich unter dem Taster ein eigenes Segment des Tastschirms bildet, in dem eine Betätigung des Tasters festgestellt werden kann. Die Sensorschicht ist hierzu als kapazitiver Näherungssensor ausgebildet.

Der Erfindung liegt die Aufgabe zugrunde, ein entsprechendes verbessertes Schaltelement anzugeben. Insbesondere soll das Schaltelement verbesserte Gestaltungsmöglichkeiten bieten. Außerdem soll ein Bedienpanel mit einem solchen Schaltelement angegeben werden, sowie ein Wandsystem mit einem solchen Schaltelement oder einem solchen Bedienpanel.

Diese Aufgabe wird gemäß der Erfindung mit den in den unabhängigen Ansprüchen angegebenen Gegenständen gelöst. Besondere Ausführungsarten der Erfindung sind in den abhängigen Ansprüchen angegeben.

Gemäß der Erfindung ist ein Schaltelement zum Auslösen eines Schaltvorgangs vorgesehen, das eine Betätigungsfläche für eine Betätigung des Schaltelements aufweist, wobei das Schaltelement derart gestaltet ist, dass durch die Betätigung das Auslösen des Schaltvorgangs erfolgt. Weiterhin ist das Schaltelement derart gestaltet, dass es für das Auslösen des Schaltvorgangs eine elektrische Spannung benötigt. Das Schaltelement weist ein triboelektrisches Element auf, wobei es derart gestaltet ist, dass durch die Betätigung der Betätigungsfläche das triboelektrische Element die elektrische Spannung erzeugt.

Ein triboelektrisches Element kann mit einer besonders flachen Bauform gestaltet werden. Es lässt sich zudem biegsam bzw. flexibel gestalten und auch transparent. Auf diese Weise ist es ermöglicht, das Schaltelement insgesamt besonders flach, biegsam und transparent zu gestalten. Daher sind die Gestaltungsmöglichkeiten des Schaltelements verbessert.

Zudem ermöglicht das triboelektrische Element eine sehr effiziente Umwandlung von mechanischer Energie in elektrische Energie. Es lässt sich erzielen, dass die elektrische Spannung für das Auslösen des Schaltvorgangs bereits durch eine leichte Berührung der Betätigungsfläche, zum Beispiel ein leichtes Überstreichen, erzeugt wird.

Eine besonders flache Ausführung des Schaltelements lässt sich erzielen, wenn die Betätigungsfläche durch einen Oberflächenbereich des triboelektischen Elements gebildet ist.

Eine transparente und/oder flexible Ausgestaltung des Schaltelements lässt sich erzielen, wenn das triboelektrische Element transparent und/oder flexibel gestaltet ist.

Vorzugsweise ist das triboelektrische Element als Drucksensor ausgebildet. Eine besonders effiziente Erzeugung der Spannung lässt sich erzielen, wenn das triboelektrische Element zwei mikrostrukturierte Polymerfolien aufweist oder aus Letzteren besteht. Außerdem lässt sich durch eine Gestaltung mit solchen Folien eine quasi beliebig großflächige und beliebig geformte Betätigungsfläche des Schaltelements bilden; zudem ist eine besonders flache bzw. dünne Ausführung ermöglicht.

Besonders geeignet ist das Schaltelement für eine Steuerung einer Beleuchtungsvorrichtung ausgestaltet.

Vorzugsweise bildet das Schaltelement einen Funkschalter. Die Schaltinformation kann hierdurch besonders vorteilhaft mit Funk an ein Steuersystem, zum Beispiel ein Steuersystem einer Beleuchtungsvorrichtung, übermittelt werden.

Vorzugsweise ist das Schaltelement in Form eines Kippschalters gebildet. Erfindungsgemäß ist das Schaltelement derart gestaltet, dass durch die Betätigung ein taktil erfassbares Feedbacksignal erzeugt wird, beispielsweise in Form einer Vibration des Schaltelements, insbesondere der Betätigungsfläche und/oder in Form einer Formveränderung eines Oberflächenbereichs des Schaltelements, insbesondere der Betätigungsfläche. Hierdurch lässt sich erzielen, dass ein Anwender des Schaltelements unmittelbar nach der Betätigung ein Feedback erhält, durch das ihm signalisiert wird, dass der Schaltvorgang ausgelöst worden ist. Das Schaltelement lässt sich somit besonders anwendungsfreundlich gestalten.

Erfindungsgemäß weist das Schaltelement weiterhin ein lichtundurchlässiges Rahmenelement zur Begrenzung der Betätigungsfläche auf. Durch ein solches Rahmenelement lässt sich die Betätigungsfläche besonders gut erkennbar gestalten. Außerdem lässt sich hierdurch ein gegebenenfalls vorhandenes lichtundurchlässiges Bauelement des Schaltelements, beispielsweise in Form eines Kondensators, kaschieren, so dass es bei Betrachtung des Schaltelements nicht als solches erkennbar ist. Hierzu ist das lichtundurchlässige Bauelement derart angeordnet, dass es bei einer äußeren Betrachtung des Schaltelements durch das Rahmenelement verdeckt ist.

Vorzugsweise ist das Schaltelement weiterhin zur Anzeige einer Statusinformation, insbesondere über einen, durch den Schaltvorgang hervorgerufenen Schaltzustand ausgestaltet, wobei es insbesondere weiterhin so gestaltet ist, dass das triboelektrische Element eine, für die Anzeige der Statusinformation erforderliche elektrische Energie erzeugt. Hierdurch lässt sich das Schaltelement besonders anwendungsfreundlich gestalten.

Gemäß einem weiteren Aspekt der Erfindung ist ein Bedienpanel vorgesehen, das wenigstens ein erfindungsgemäßes Schaltelement aufweist. Vorteilhaft ist das Bedienpanel als Touchpanel ausgestaltet.

Vorzugsweise weist das Bedienpanel außerdem ein Display oder eine gedruckte Schaltung auf, wobei das wenigstens eine triboelektrische Element des wenigstens einen Schaltelements auf dem Display bzw. der gedruckten Schaltung aufgebracht angeordnet ist.

Vorzugsweise weist das Bedienpanel wenigstens zwei erfindungsgemäße Schaltelemente auf, wobei die triboelektrischen Elemente der wenigstens zwei Schaltelemente eine einstückig ausgebildete Folie umfassen, durch die die Betätigungsflächen der wenigstens zwei Schaltelemente gebildet sind.

Gemäß einem weiteren Aspekt der Erfindung ist ein Wandsystem vorgesehen, das ein Wandelement aufweist, sowie ein erfindungsgemäßes Schaltelement oder ein erfindungsgemäßes Bedienpanel, wobei das Schaltelement bzw. das Bedienpanel auf dem Wandelement angeordnet ist. Durch die flache Gestaltungsmöglichkeit des Schaltelements eignet es sich besonders zur Anordnung auf einer Wand. Vorzugsweise besteht das Wandelement aus einem lichtdurchlässigen bzw. transparenten Material. Eine besonders geeignete Gestaltung ergibt sich dabei, wenn auch das Schaltelement bzw. das Bedienpanel transparent gestaltet ist.

Die Erfindung wird im Folgenden anhand von Ausführungsbeispielen und mit Bezug auf die Zeichnungen näher erläutert. Es zeigen:
- Fig. 1: eine Skizze einer Seitenansicht eines erfindungsgemäßen Schaltelements nach Art eines Kippschalters,
- Fig. 2a: eine Querschnitt-Skizze zu einem weiteren Beispiel eines erfindungsgemäßen Schaltelements nach Art eines Kippschalters, wobei sich die Betätigungsfläche in einer ersten Stellung befindet,
- Fig. 2b: eine entsprechende Skizze, wobei sich die Betätigungsfläche in einer zweiten, gedrückten Stellung befindet,
- Fig. 3: ein Beispiel eines erfindungsgemäßen Wandsystems mit einer transparenten Wand, auf der ein flach ausgeführtes erfindungsgemäßes Schaltelement angeordnet ist,
- Fig. 4: ein weiteres Beispiel eines Wandsystems, wobei das Schaltelement länglich geformt ausgestaltet ist und
- Fig. 5: ein Beispiel eines erfindungsgemäßen Bedienpanels.

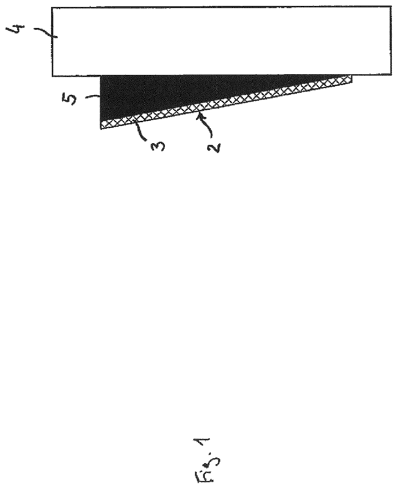

Fig. 1 zeigt eine Skizze eines erfindungsgemäßen Schaltelements nach Art einer seitlichen Ansicht. Das Schaltelement ist in Form eines Kippschalters ausgebildet.

Das Schaltelement ist zum Auslösen eines Schaltvorgangs ausgestaltet und weist hierzu eine Betätigungsfläche 2 für eine Betätigung des Schaltelements auf. Das Schaltelement ist so gestaltet, dass durch die Betätigung der Betätigungsfläche 2 das Auslösen des Schaltvorgangs erfolgt.

Die Betätigungsfläche 2 ist bei diesem Ausführungsbeispiel als Oberflächenbereich eines Betätigungselements 5 gestaltet. Weiterhin weist das Schaltelement ein Gehäuse 4 auf, wobei das Betätigungselement 5 derart beweglich relativ zu dem Gehäuse 4 gelagert angeordnet ist, dass es sich - wie bei einem herkömmlichen Kippschalter - hin und her kippen lässt. Die Betätigung erfolgt also in diesem Fall durch ein entsprechendes Kippen des Betätigungselements 5 relativ zum Gehäuse 4.

Das Schaltelement ist weiterhin derart gestaltet, dass es für das Auslösen des Schaltvorgangs eine elektrische Spannung benötigt.

Hierzu weist das Schaltelement weiterhin ein triboelektrisches Element 3 auf, wobei es so gestaltet ist, dass durch die Betätigung der Betätigungsfläche 2 das triboelektrische Element 3 die elektrische Spannung erzeugt, die für das Auslösen des Schaltvorgangs benötigt wird.

Das triboelektrische Element 3 kann als flaches Element gestaltet sein; bei dem hier gezeigten Beispiel ist die Betätigungsfläche 2 durch einen Oberflächenbereich des triboelektrischen Elements 3 gebildet. Das triboelektische Element 3 ist als Teil des Betätigungselements 5 gestaltet.

Vorzugseise ist das triboelektrische Element 3 als Drucksensor ausgebildet. Besonders vorteilhaft weist das triboelektrische Element 3 zwei mikrostrukturierte Polymerfolien auf oder besteht aus Letzteren. Hierdurch lässt es sich besonders flach gestalten. Außerdem lässt sich das triboelektrische Element 3 hierdurch so gestalten, dass bereits durch ein leichtes Berühren oder Überstreichen der Betätigungsfläche 2 die zum Auslösen des Schaltvorgangs erforderliche elektrische Spannung erzeugt wird. Wird auf die Folien ein Druck ausgeübt, so wird durch den triboelektrischen Effekt zwischen den beiden Folien elektrische Energie bzw. die elektrische Spannung erzeugt. Auf diese Weise ist ermöglicht, dass das Schaltelement ohne äußere Energieversorgung funktionieren kann, also nicht von einer äußeren Stromquelle abhängig ist.

Das Kippen des Betätigungselements 5 bei der Betätigung ist als solches für die Erzeugung der elektrischen Spannung nicht erforderlich. Allerdings hat es bei dem hier gezeigten Ausführungsbeispiel die Funktion, durch die Betätigung ein taktiles bzw. haptisch erfassbares Feedback-Signal für einen Anwender zu erzeugen, das dem Anwender vermittelt, dass der Schaltvorgang ausgelöst worden ist. Dies vermittelt bei der Benutzung des Schaltelements dem Anwender ein Gefühl einer zuverlässigen und sicheren Funktion des Schaltelements.

Die elektrische Spannung, die durch das triboelektrische Element 3 bei der Betätigung erzeugt wird, wird also zum Auslösen des Schaltvorgangs verwendet, also beispielsweise für die Generierung und Übermittlung eines entsprechenden elektrischen Steuersignals.

Das Schaltelement kann beispielsweise ein Schaltelement für eine Steuerung einer Beleuchtungsvorrichtung bilden.

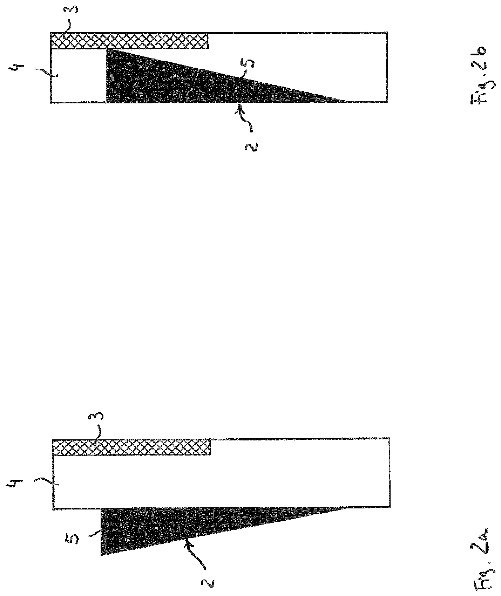

In Fig. 2a ist eine Variante des in Fig. 1 skizzierten Schaltelements in Form einer Querschnitt-Skizze gezeigt, wobei sich das Betätigungselement 5 in einer ersten Kippstellung befindet, Fig. 2b zeigt eine entsprechende Skizze, bei der sich das Betätigungselement 5 in einer zweiten Kippstellung bzw. in einem gedrückten Zustand befindet.

Im Unterschied zu der oben beschriebenen Ausführung ist hier das triboelektrische Element 3 nicht auf dem Betätigungselement 5 angeordnet, sondern innerhalb des Gehäuses 4, wobei die Anordnung derart ist, das das triboelektrische Element 3 bei der Betätigung durch das Betätigungselement 5 berührt wird.

Zum Betätigen wird also auf die Betätigungsfläche 2 des Betätigungselements 5 gedrückt, so dass das Betätigungselement 5 relativ zu dem Gehäuse 4 gekippt wird, bis es schließlich das triboelektrische Element 3 berührt, so dass durch diese Berührung die elektrische Spannung erzeugt wird.

Gemäß einer weiteren (in den Figuren nicht gezeigten) Variante kann auch vorgesehen sein, dass das triboelektrische Element 3 nicht an der Rückseite, sondern an einer Längsseite des Gehäuses 4 angeordnet ist. Bei der Betätigung des Schaltelements gleitet dann das Betätigungselement 5 mit der entsprechenden Seitenfläche an dem triboelektrischen Element 3 entlang, so dass durch diese Berührung die elektrische Spannung erzeugt wird. Natürlich kann auch auf jeder der beiden Seiten jeweils ein entsprechendes triboelektrisches Element angeordnet sein.

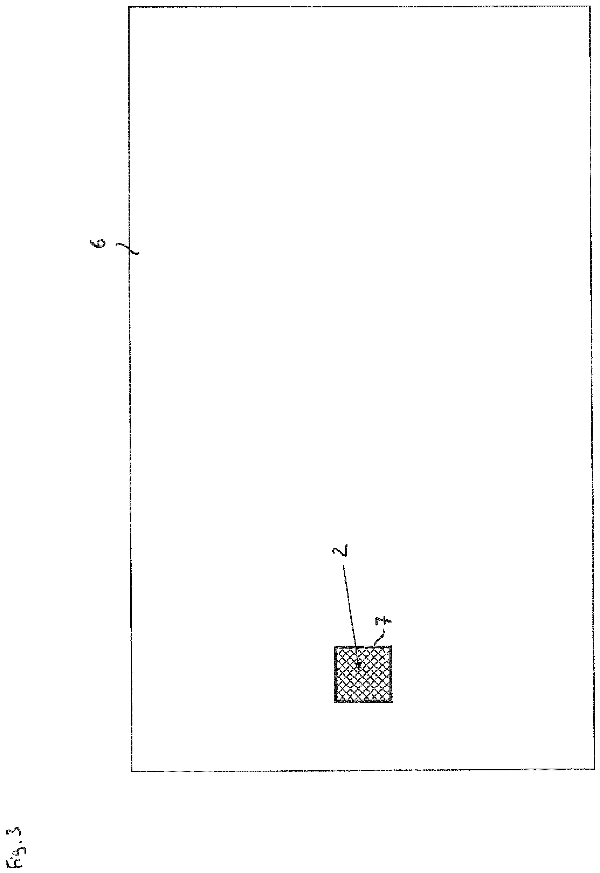

In Fig. 3 ist ein weiteres Ausführungsbeispiel eines erfindungsgemäßen Schaltelements skizziert. Soweit nicht anders angegeben, gelten die obigen Ausführungen auch für dieses Beispiel entsprechend.

Das Schaltelement ist bei dieser Ausführung flächig bzw. sehr dünn gestaltet. Zur Betätigung ist hier keine Kippbewegung vorgesehen, es genügt eine leichte Berührung oder ein Überstreichen der Betätigungsfläche 2.

Beim hier gezeigten Beispiel ist das Schaltelement flächig auf einem Wandelement 6 aufgebracht angeordnet. Das Wandelement 6 weist vorzugsweise einen planen Oberflächenbereich auf, auf dem das Schaltelement entsprechend planparallel angeordnet ist. Durch die besonders flache Gestaltung lässt sich erzielen, dass das Schaltelement praktisch so gut wie nicht über die umgebende Oberfläche des Wandelements 6 vorsteht. Hierdurch ist auch eine Verletzungsgefahr für den Anwender besonders reduziert.

Das triboelektrische Element 3 ist bei diesem Beispiel vorzugsweise transparent gestaltet und auch das Schaltelement als solches. Weiterhin vorzugsweise ist auch das Wandelement 6 transparent bzw. lichtdurchlässig gestaltet. Das Wandelement 6 und das Schaltelement bilden vorzugsweise Teile eines Wandsystems. Durch die transparente Gestaltung lässt sich erzielen, dass das äußere Erscheinungsbild des Wandsystems besonders hochwertig wirkt. Das Schaltelement weist ein lichtundurchlässiges Rahmenelement 7 zur Begrenzung der Betätigungsfläche 2 auf. Hierdurch lässt sich die Betätigungsfläche 2 für den Anwender besonders gut kenntlich gestalten, was insbesondere bei einer entsprechend transparenten Gestaltung des Wandsystems vorteilhaft ist.

Bei dem Wandelement 6 kann es sich beispielsweise um eine Wand eines Raumes, beispielsweise eines Arbeits- oder Wohnzimmers handeln oder beispielsweise um eine Trennwand zwischen zwei Wohn- bzw. Arbeitsbereichen oder dergleichen. Vorzugsweise weist das Schaltelement keinen Energiespeicher auf, insbesondere keinen Energiespeicher in Form eines Akkumulators oder einer Batterie oder eines Kondensators. Hierdurch lässt es sich besonders gleichmäßig transparent gestalten. Außerdem ist das Schaltelement hierzu weiterhin so gestaltet, das es keine Spule und/oder kein piezoelektrisches Element aufweist.

Gemäß der Erfindung ist das Schaltelement weiterhin derart gestaltet, dass durch die Betätigung ein taktil erfassbares Feedbacksignal erzeugt wird, hier allerdings beispielsweise in Form einer Vibration des Schaltelements, insbesondere der Betätigungsfläche 2 und/oder in Form einer Formveränderung eines Oberflächenbereichs des Schaltelements, insbesondere der Betätigungsfläche 2.

Beispielsweise kann hierzu vorgesehen sein, dass sich die Betätigungsfläche 2 so verformt, dass sie drei-dimensionale Knöpfe bildet. Diese Veränderung der Oberflächenstruktur kann beispielsweise durch Mikro-Fluidik oder mittels eines Piezoelements bzw. mittels Piezoelementen vorgesehen sein. Bei einem Piezoelement handelt es sich typischerweise um ein lichtundurchlässiges Bauteil. Somit weist das Schaltelement in dem zuletzt genannten Fall ein lichtundurchlässiges Bauteil auf.

Falls das Schaltelement ein derartiges lichtundurchlässiges Bauelement aufweist, es ist vorgesehen, dass das Rahmenelement 7 lichtundurchlässig ist und dabei das lichtundurchlässige Bauelement so angeordnet ist, dass es bei einer äußeren Betrachtung des Schaltelements, also beispielsweise normal zu dem Wandelement 6, durch das Rahmenelement 7 verdeckt ist. Auf diese Weise lässt sich das lichtundurchlässige Bauelement durch das Rahmenelement 7 kaschieren. Hierdurch lässt sich wiederum das äußere Erscheinungsbild besonders positiv wirkend gestalten. Weiterhin vorzugsweise bildet das Schaltelement einen Funkschalter. Hierdurch lässt sich vermeiden, dass elektrische Leitungen durch das Wandelement 6 oder auf dem Wandelement 6 zu dem Schaltelement geführt sind. Auf diese Weise ist ein besonders ebenmäßiges äußeres Erscheinungsbild des Wandelements 6 und des Wandsystems ermöglicht.

Der Funkschalter ist vorteilhaft so gestaltet, dass zum Auslösen des Schaltvorgangs eine Schaltinformation per Funk an ein Steuersystem übermittelt wird, wobei das Steuersystem beispielsweise zur Steuerung einer Beleuchtungsvorrichtung gestaltet ist. Ein Aussenden eines von dem Schaltelement generierten Schaltsignals per Funk erfordert grundsätzlich einen gewissen Zeitraum. In einem solchen Fall kann es vorteilhaft sein, wenn das Schaltelement für den Aussende-Vorgang einen Energiespeicher aufweist, beispielsweise einen Kondensator. Ein solcher Kondensator ist typischerweise lichtundurchlässig, so dass er wiederum vorteilhaft - wie oben beispielhaft für den Fall eines Piezoelements beschrieben - durch das Rahmenelement 7 kaschiert angeordnet ist.

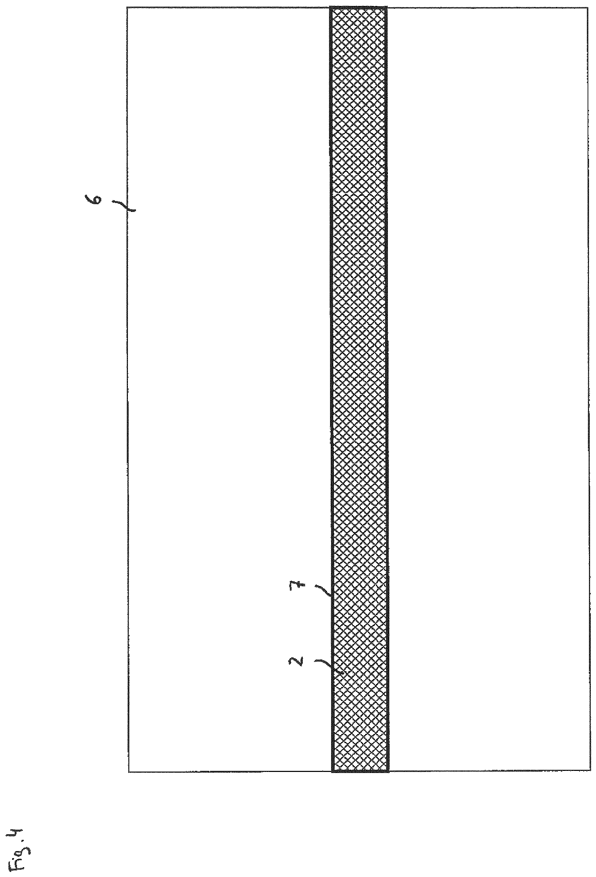

In Fig. 4 ist eine Variante der in Fig. 3 gezeigten Ausführung skizziert, bei der das Schaltelement großflächig und dabei länglich gestaltet ist. Das Schaltelement bzw. die Betätigungsfläche 2 kann sich vergleichsweise großflächig über das Wandelement 6 hinweg erstrecken. Durch die Ausgestaltung des triboelektrischen Elements 3 mit den genannten Folien lässt sich das Schaltelement und die Betätigungsfläche 2 in praktisch jeder beliebigen Form und Größe und dabei sehr flach ausführen. Hierdurch lässt sich das Schaltelement besonders anwendungsfreundlich gestalten.

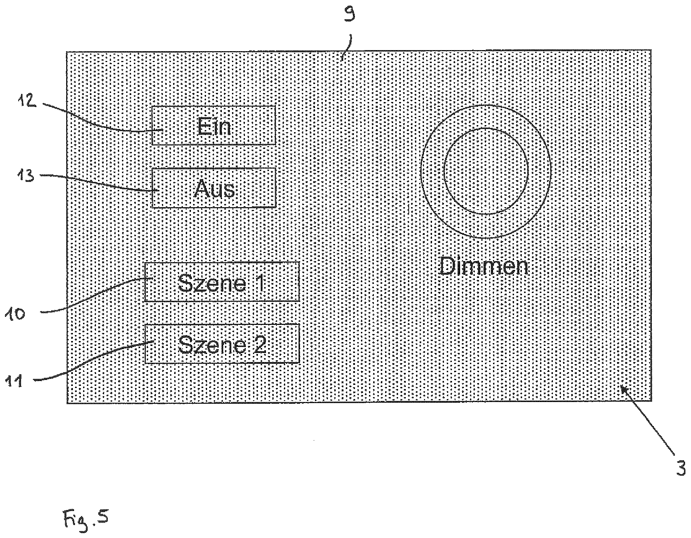

Fig. 5 zeigt ein Beispiel eines erfindungsgemäßen Bedienpanels 9. Das Bedienpanel 9 weist wenigstens ein erfindungsgemäßes Schaltelement auf, vorzugsweise wenigstens zwei solche Schaltelemente. Das Bedienpanel 9 kann ein Touchpanel bilden.

Dabei ist die Gestaltung vorzugsweise derart, dass die entsprechenden triboelektrischen Elemente der Schaltelemente durch zwei Folien gebildet sind, die sich über mehrere der Schaltelemente, vorzugsweise alle Schaltelemente des Bedienpanels 9 erstrecken und dabei derart in Bereiche unterteilt sind, dass jeder dieser Bereiche jeweils das triboelektrische Element und vorzugsweise die Betätigungsfläche eines der Schaltelemente bildet.

Die triboelektrischen Elemente der wenigstens zwei Schaltelemente können somit eine einstückig ausgebildete Folie umfassen, durch die die Betätigungsflächen der wenigstens zwei Schaltelemente gebildet sind.

Die Schaltelemente des Bedienpanels 9 können beispielsweise für eine Aktivierung unterschiedlicher Steuerungen der Beleuchtungsvorrichtung vorgesehen sein, wie dies in Fig. 5 durch zwei entsprechende Betätigungsflächen bzw. Bereiche 10, 11 angedeutet ist.

Jedem Bereich ist also ein entsprechender Abschnitt der beiden Folien zugeordnet, wobei diese Abschnitte untereinander getrennt sind. Bei Betätigen eines entsprechenden Bereichs erzeugt dann der entsprechende Abschnitt der Folie die entsprechende elektrische Spannung, so dass hieraus wiederum ein Rückschluss dahingehend erhalten werden kann, welcher der Bereiche betätigt worden ist. Es lassen sich auf diese Weise auch komplexere Eingabeelemente bzw. Bedienpanele bilden.

Vorzugsweise weist das Bedienpanel außerdem ein Display oder eine gedruckte Schaltung auf, wobei das triboelektrische Element bzw. die triboelektrischen Elemente bzw. die Folien auf dem Display aufgebracht angeordnet ist bzw. sind.

Durch die beschriebene Ausführung lässt sich das Bedienpanel sehr flach bzw. dünn gestalten.

Bei allen genannten Ausführungsbeispielen kann das Schaltelement weiterhin dazu ausgestaltet sein, eine Statusinformation, insbesondere über einen, durch den Schaltvorgang hervorgerufenen Schaltzustand anzuzeigen. Vorzugsweise ist hierbei das Schaltelement weiterhin so gestaltet, dass das triboelektrische Element 3 eine, für die Anzeige der Statusinformation erforderliche elektrische Energie erzeugt.

Zur Anzeige einer derartigen Statusinformation ist das Schaltelement vorzugsweise mit einer Technik kombiniert, wie sie beispielsweise bei E-Readern bzw. E-Papers zum Einsatz kommt. Dabei wird keine Energie für die Darstellung einer Information an sich benötigt, sondern lediglich zur Veränderung der Darstellung der Information. In diesem Fall ist also der Energieverbrauch sehr gering, so dass die bei der Betätigung des Schaltelements durch das triboelektrische Element erzeugte elektrische Energie bzw. die erzeugte elektrische Spannung auch zur Darstellung der Statusinformation genutzt werden kann.

Bei der Statusinformation kann es sich beispielsweise um ein einfaches Statussymbol handeln, durch das beispielsweise ein Schaltzustand wie "EIN" oder "AUS" dargestellt bzw. kenntlich gemacht wird. Vorzugsweise ist das Schaltelement so gestaltet, dass das Statussymbol auf der betreffenden Betätigungsfläche angezeigt wird, wie in Fig. 5 beispielhaft anhand der beiden weiteren Bereiche 12, 13 angedeutet.

Selbstverständlich lässt sich auch ein erfindungsgemäßes Bedienpanel 9 flach auf dem oben genannten Wandelement 6 anordnen, um ein entsprechendes Wandsystem zu bilden.

## Patentansprüche

1. Schaltelement zum Auslösen eines Schaltvorgangs, aufweisend
- eine Betätigungsfläche (2) für eine Betätigung des Schaltelements, wobei das Schaltelement derart gestaltet ist, dass durch die Betätigung das Auslösen des Schaltvorgangs erfolgt,
wobei das Schaltelement weiterhin derart gestaltet ist, dass es für das Auslösen des Schaltvorgangs eine elektrische Spannung benötigt, **gekennzeichnet durch**
- ein triboelektrisches Element (3), wobei das Schaltelement derart gestaltet ist, dass durch die Betätigung der Betätigungsfläche (2) das triboelektrische Element (3) die elektrische Spannung erzeugt,
wobei das Schaltelement derart gestaltet ist, dass durch die Betätigung ein taktil erfassbares Feedbacksignal erzeugt wird,
- ein lichtundurchlässiges Rahmenelement (7) zur Begrenzung der Betätigungsfläche (2), und
- ein lichtundurchlässiges elektronisches Bauelement, wobei das elektronische Bauelement derart angeordnet ist, dass es bei einer äußeren Betrachtung des Schaltelements durch das Rahmenelement (7) verdeckt ist.

2. Schaltelement nach Anspruch 1,
bei der die Betätigungsfläche (2) durch einen Oberflächenbereich des triboelektischen Elements (3) gebildet ist.

3. Schaltelement nach Anspruch 1 oder 2,
bei dem das triboelektrische Element (3) transparent und/oder flexibel gestaltet ist.

4. Schaltelement nach einem der vorhergehenden Ansprüche,
bei dem das triboelektrische Element (3) als Drucksensor ausgebildet ist.

5. Schaltelement nach einem der vorhergehenden Ansprüche,
bei dem das triboelektrische Element (3) zwei mikrostrukturierte Polymerfolien aufweist oder aus Letzteren besteht.

6. Schaltelement nach einem der vorhergehenden Ansprüche
in Form eines Schaltelements für eine Steuerung einer Beleuchtungsvorrichtung.

7. Schaltelement nach einem der vorhergehenden Ansprüche
in Form eines Funkschalters.

8. Schaltelement nach einem der vorhergehenden Ansprüche
in Form eines Kippschalters.

9. Schaltelement nach einem der vorhergehenden Ansprüche,
wobei das taktil erfassbare Feedbacksignal eine Vibration des Schaltelements, insbesondere der Betätigungsfläche (2) und/oder eine Formveränderung eines Oberflächenbereichs des Schaltelements, insbesondere der Betätigungsfläche (2) ist.

10. Schaltelement nach einem der vorhergehenden Ansprüche,
bei dem das elektronische Bauelement ein Kondensator ist.

11. Schaltelement nach einem der vorhergehenden Ansprüche,
das weiterhin zur Anzeige einer Statusinformation, insbesondere über einen, durch den Schaltvorgang hervorgerufenen Schaltzustand ausgestaltet ist, wobei es insbesondere weiterhin so gestaltet ist, dass das triboelektrische Element (3) eine, für die Anzeige der Statusinformation erforderliche elektrische Energie erzeugt.

12. Bedienpanel (9), aufweisend
wenigstens ein Schaltelement nach einem der vorhergehenden Ansprüche, insbesondere in Form eines Touchpanels.

13. Bedienpanel (9) nach Anspruch 12,
weiterhin aufweisend
- ein Display oder eine gedruckte Schaltung, wobei das wenigstens eine triboelektrische Element (3) des wenigstens einen Schaltelements auf dem Display bzw. der gedruckten Schaltung aufgebracht angeordnet ist.

14. Bedienpanel nach Anspruch 12 oder 13,
das wenigstens zwei Schaltelemente nach einem der Ansprüche 1 bis 11 aufweist, wobei die triboelektrischen Elemente (3) der wenigstens zwei Schaltelemente eine einstückig ausgebildete Folie umfassen, durch die die Betätigungsflächen (2) der wenigstens zwei Schaltelemente gebildet sind.

15. Wandsystem, aufweisend
- ein Wandelement (6), das insbesondere aus einem lichtdurchlässigen bzw. lichtdurchlässigen Material besteht sowie
- ein Schaltelement nach einem der Ansprüche 1 bis 11 oder ein Bedienpanel (9) nach einem der Ansprüche 12 bis 14,
wobei das Schaltelement bzw. das Bedienpanel (9) auf dem Wandelement (6) angeordnet ist.

## Claims

1. Switching element for triggering a switching operation, comprising
- an actuating surface (2) for actuation of the switching element, wherein the switching element is so designed that the triggering of the switching operation follows the actuation,
- wherein the switching element is further so designed that it requires an electrical voltage to trigger the switching operation,
**characterized in that**
- It comprises a triboelectric element (3), wherein the switching element is so designed that the actuation of the actuating surface (2) causes the triboelectric element (3) to generate the electrical voltage,
- wherein the switching element is so designed that the actuation generates a tactilely-detectable feedback signal,
- an opaque frame element (7) to limit the actuating surface (2), and
- an opaque electronic component, wherein the electronic component is so arranged that it is covered by the frame element (7) in an external view of the switching element.

2. Switching element according to claim 1, wherein the actuating surface (2) is formed by a surface region of the triboelectric element (3).

3. Switching element according to claim 1 or 2, wherein the triboelectric element (3) is designed to be transparent and/or flexible.

4. Switching element according to one of the preceding claims, wherein the triboelectric element (3) is designed as a pressure sensor.

5. Switching element according to one of the preceding claims, wherein the triboelectric element (3) comprises or consists of two micro-structured polymer films.

6. Switching element according to one of the preceding claims is in the form of a switching element for controlling a lighting device.

7. Switching element according to one of the preceding claims is in the form of a radio switch.

8. Switching element according to one of the preceding claims is in the form of a toggle switch.

9. Switching element according to one of the preceding claims, wherein the tactilely-detectable feedback signal is a vibration of the switching element, in particular the actuating surface (2), and/or a change in the shape of a surface region of the switching element, in particular the actuating surface (2).

10. Switching element according to one of the preceding claims, wherein the electronic component is a capacitor.

11. Switching element according to one of the preceding claims that is further designed to display status information, in particular via a, switching state caused by the switching operation, wherein, in particular, it is further so designed that the triboelectric element (3) produces electrical energy required for the display of the status Information.

12. Control panel (9), comprising at least one switching element according to one of the preceding claims, in particular in the form of a touch panel.

13. Control panel (9) according to claim 12, further comprising a display or a printed circuit, wherein the at least one triboelectric element (3) of the at least one switching element is applied to the display or the printed circuit.

14. Control panel according to claim 12 or 13, comprising at least two switching elements according to one of the claims 1 to 11, wherein the triboelectric elements (3) of the at least two switching elements comprise an integrally-formed film through which the actuating surfaces (2) of the at least two switching elements are formed.

15. Wall system comprising
- a wall element (6), which consists in particular of a translucent material, and
- a switching element according to one of the claims 1 to 11 or a control panel (9) according to one of the claims 12 to 14,
- wherein the switching element or the control panel (9) is arranged on the wall element (6).

## Revendications

1. Élément de commutation pour le déclenchement d'un processus de commutation, comprenant :
- une surface d'actionnement (2) pour un actionnement de l'élément de commutation, l'élément de commutation étant conçu de façon à ce que l'actionnement provoque le déclenchement du processus de commutation,
l'élément de commutation étant en outre conçu de façon à ce qu'il nécessite, pour le déclenchement du processus de commutation, une tension électrique,
**caractérisé par**
- un élément tribo-électrique (3), l'élément de commutation étant conçu de façon à ce que l'actionnement de la surface d'actionnement (2) provoque la production de la tension électrique par l'élément tribo-électrique (3),
l'élément de commutation étant conçu de façon à ce que l'actionnement génère un signal de retour détectable de manière tactile,
- un élément de châssis opaque (7) pour la limitation de la surface d'actionnement (2) et
- un composant électronique opaque, le composant électronique étant disposé de façon à ce qu'il soit recouvert par l'élément de châssis (7) lors d'une observation externe de l'élément de commutation.

2. Élément de commutation selon la revendication 1,
dans lequel la surface d'actionnement (2) est constituée d'une zone superficielle de l'élément tribo-électrique (3).

3. Élément de commutation selon la revendication 1 ou 2,
dans lequel l'élément tribo-électrique (3) est conçu de manière transparente et/ou flexible.

4. Élément de commutation selon l'une des revendications précédentes,
dans lequel l'élément tribo-électrique (3) est conçu comme un capteur de pression.

5. Élément de commutation selon l'une des revendications précédentes,
dans lequel l'élément tribo-électrique (3) comprend ou est constitué de deux films polymères micro-structurés.

6. Élément de commutation selon l'une des revendications précédentes, sous la forme d'un élément de commutation pour une commande d'un dispositif d'éclairage.

7. Élément de commutation selon l'une des revendications précédentes,
sous la forme d'un interrupteur radio.

8. Élément de commutation selon l'une des revendications précédentes,
sous la forme d'un interrupteur à bascule.

9. Élément de commutation selon l'une des revendications précédentes,
le signal de retour détectable de manière tactile étant une vibration de l'élément de commutation, plus particulièrement de la surface d'actionnement (2) et/ou un changement de forme d'une zone superficielle de l'élément de commutation, plus particulièrement de la surface d'actionnement (2).

10. Élément de commutation selon l'une des revendications précédentes,
dans lequel le composant électronique est un condensateur.

11. Élément de commutation selon l'une des revendications précédentes,
qui est conçu en outre pour l'affichage d'une information d'état, plus particulièrement par l'intermédiaire d'un état de commutation provoqué par le processus de commutation, moyennant quoi il est en outre conçu de façon à e que l'élément tribo-électrique (3) génère une énergie électrique nécessaire pour l'affichage de l'information d'état.

12. Panneau de commande (9) comprenant
au moins un élément de commutation selon l'une des revendications précédentes, plus particulièrement sous la forme d'un panneau tactile.

13. Panneau de commande (9) selon la revendication 12,
comprenant en outre
- un écran ou un circuit imprimé, l'au moins un élément tribo-électrique (3) de l'au moins un élément de commutation étant disposé sur l'écran ou sur le circuit imprimé.

14. Panneau de commande selon la revendication 12 ou 13,
qui comprend au moins deux éléments de commutation selon l'une des revendications 1 à 11, les éléments tribo-électriques (3) des au moins deux éléments de commutation comprenant un film conçu d'une seule pièce, duquel sont constitués les surfaces d'actionnement (2) des au moins deux éléments de commutation.

15. Système mural comprenant
- un élément mural (6), qui est constitué plus particulièrement d'un matériau opaque ou transparent ainsi que
- un élément de commutation selon l'une des revendications 1 à 11 ou un panneau de commande (9) selon l'une des revendications 12 à 14,
l'élément de commutation ou le panneau de commande (9) étant disposé sur l'élément mural (6).
